# EUROPEAN PATENT APPLICATION

(11) **EP 4 292 996 A1**
(43) Date of publication of application: **20.12.2023**
(21) Application number: 21934419.9
(22) Date of filing: 09.09.2021
(51) Int. Cl.: C04B 37/00, G21C 21/02, G21C 3/07

(54) **CONNECTION METHOD FOR SILICON CARBIDE CLADDING FOR NUCLEAR APPLICATION, AND SILICON CARBIDE CLADDING AND APPLICATION THEREOF**

(30) Priority: 29.03.2021 CN 202110335888
(71) Applicant: Ling Dong Nuclear Power Co., Ltd, Shenzhen, Guangdong 518028 (CN); China Nuclear Power Technology Research Institute Co., Ltd, Shenzhen Guangdong 518029 (CN); China General Nuclear Power Corporation, Shenzhen, Guangdong 518028 (CN); CGN Power Co., Ltd., Shenzen, Guangdong 518028 (CN)
(72) Inventor: WU, Lixiang, Shenzhen, Guangdong 518031 (CN); XUE, Jiaxiang, Shenzhen, Guangdong 518031 (CN); LIAO, Yehong, Shenzhen, Guangdong 518031 (CN); REN, Qisen, Shenzhen, Guangdong 518031 (CN); ZHAI, Jianhan, Shenzhen, Guangdong 518031 (CN); ZHANG, Yongdong, Shenzhen, Guangdong 518031 (CN); ZHANG, Xiansheng, Shenzhen, Guangdong 518031 (CN)
(74) Representative: Westphal, Mussgnug & Partner, Patentanwälte mbB
(86) International application number: PCT/CN2021/117531
(87) International publication number: WO 2022/205782

(57) **Abstract**

Disclosed in the present invention are a connection method for a silicon carbide (SiC) cladding for nuclear application, and a SiC cladding and an application thereof. The connection method comprises the following steps: S1, preparing a connection slurry; S2, uniformly applying the connection slury on connection surfaces of a SiC end plug and/or a SiC cladding tube, and relatively matching the connection surfaces of the SiCend plug and the SiC cladding tube to form a connection structure; S3, heating the connection structure to 100-300°C in a protective atmosphere, keeping the temperature for 0.1-4 h, and curing the connection slurry between the SiC end plug and the SiC cladding tube to form a connection layer; and S4, performing resistance welding treatment on the cured connection structure to densify the connection layer, and connecting the SiC end plug and the SiC cladding tube densely to form the SiC cladding. According to the connection method for a SiC cladding for nuclear application in the present invention, rapid connection between the end plug and the cladding tube is achieved by using the resistance welding techology, thereby greatly saving the working time, and improving the connection efficiency; and a heat-affected zone of resistance welding connection is small, such that a nuclear fuel inside the cladding cannot be affected, and the reliability of the cladding is improved.

## Description

### FIELD OF THE INVENTION

The present invention relates to the field of nuclear fuel technology, and in particular to a connection method for a silicon carbide cladding for nuclear use, and a silicon carbide cladding and its application.

### DESCRIPTION OF THE RELATED ART

For nuclear cladding materials, zirconium alloys are currently commercially available. However, zirconium alloys have poor high-temperature oxidation performance and low high-temperature strength, which can easily cause nuclear fuel leakage under water-loss conditions; in addition, zirconium alloys are prone to hydrogen explosions, such as the 2011 Fukushima nuclear accident, due to the large amount of hydrogen production under high-temperature water vapor conditions. Silicon carbide (SiC) ceramics have a high melting point, high strength and corrosion resistance, making them very widely used in vehicles, marine engineering, nuclear energy, aerospace and other fields. In addition, SiC has good resistance to neutron irradiation and a low neutron absorption cross-section and, therefore, it has great potential to be used as a reactor cladding material in the nuclear energy field.

Because of these excellent properties, SiC can solve the above problems that may occur during the service of zirconium alloys. However, for the application of SiC cladding, because of its high melting point and low self-diffusion coefficient, there is an urgent need to solve the problem of connection of the two ends for the application of SiC cladding. The existing connection technology mainly uses sintering furnace for the connection, such as the pressureless sintering furnace, the hot pressing sintering furnace, the spark plasma sintering furnace, the muffle furnace, etc. Although the above sintering devices can realize SiC connection, the connection efficiency is very low, and a large heat-affected zone is generated, which are not conducive to the sealing of the SiC cladding with nuclear fuels loaded.

### SUMMARY OF THE INVENTION

The technical problem to be solved by the present invention is to provide an efficient connection method for a silicon carbide cladding for nuclear use, a silicon carbide cladding and an application thereof.

The technical solution adopted by the present invention to solve its technical problem is providing a connection method for a silicon carbide cladding for nuclear use, including the following steps:
S1, preparing a connecting slurry;
S2, uniformly applying the connecting slurry to a connecting surface of a SiC end plug and/or a connecting surface of a SiC cladding tube, and forming a connecting structure by mating the SiC end plug and the SiC cladding tube at their connecting surfaces;
S3, heating the connecting structure up to a temperature of 100°C to 300°C and holding the temperature for 0.1-4h for curing under a protective atmosphere, such that the connecting slurry between the SiC end plug and the SiC cladding tube is cured to form a connecting layer;
S4, performing a resistance welding treatment to the connecting structure after curing to densify the connecting layer, which densely connects the SiC end plug and the SiC cladding tube to form the SiC cladding.

Preferably, step S1 includes adding a connecting material and a dispersant to an organic solvent, and dispersing the connecting material and dispersant homogeneously;
The ratio of the connecting material to the dispersant is 99.9wt% to 99.5wt% : 0.1wt% to 0.5wt%.

Preferably, the connecting material comprises at least one of a ceramic powder, a glass powder, a metal powder, a precursor and a sintering aid.

Preferably, the glass powder accounts for 0 to 50% of the total powder mass of the glass powder and the ceramic powder, the metal powder accounts for 0 to 50% of the total powder mass of the ceramic powder, the glass powder and the metal powder, and the precursor accounts for 0 to 50% of the total powder mass of the ceramic powder, the glass powder, the metal powder and the precursor.

Preferably, the ceramic powder is at least one of silicon carbide, zirconium carbide, titanium carbide, titanium carbonitride, and alumina, and has a powder particle size of 0.1µm to 10µm.

Preferably, the glass powder is at least one of SiO₂-Y₂O₃-Al₂O₃, SiO₂-Y₂O₃-MgO, CaO-Al₂O₃, CaO-Al₂O₃-SiO₂.

Preferably, the metal powder is at least one of Ti, Zr, Nb, Al and Ni, and has a powder particle size of 0.1µm to 10µm.

Preferably, the precursor is at least one of polycarbosilane, polyoxysilane, and polysilazane, and has a ceramic yield of 60wt% to 85wt%.
Preferably, the mass percentage of the sintering aid in the connecting material is 1% to 10%;
Said sintering aid is Al2O3-Re2O3, wherein Re is Sc, Y, La, Ce, Pr, Nd, Pm, Sm, Eu, Gd, Tb, Dy, Ho, Er, Tm, Yb or Lu;
The ratio of Al₂O₃ to Re₂O₃ in the sintering aid is 1wt% to 99wt% : 99wt% to 1wt%.

Preferably, the dispersant is at least one of oleic acid, stearic acid and castor oil.

Preferably, the organic solvent is at least one of anhydrous ethanol, acetone, xylene, and polyethylene glycol.

Preferably, the protective atmosphere of step S3 and step S4 is nitrogen, argon or vacuum.

Preferably, in step S4, the resistance welding treatment is performed with a resistance welding current of 10,000A to 30,000A, a mechanical pressurization of 0.1MPa to 1MPa, and a welding time of 10s to 60s.

Preferably, in step S3, the resistivity of the connecting layer is 10⁻⁴ Ω·cm to 10⁻¹ Ω·cm.

Preferably, in step S4, the thickness of the connecting layer is 0.1µm to 20µm, and its shear strength at room temperature is 50MPa to 150MPa, its shear strength at a high temperature of 1200°C is 80MPa to 200MPa.

Preferably, the leakage rate of the SiC cladding is 0~1×10⁻⁸ Pa·m³/s.

The present invention provides another connection method for a silicon carbide cladding for nuclear use, including the following steps:
S1, preparing a connecting slurry;
S2, uniformly applying the connecting slurry to a connecting surface of a SiC end plug and/or a connecting surface of the SiC cladding tube, and forming a connecting structure by matching the SiC end plug and the SiC cladding tube at their connecting surfaces;
S3, heating the connecting structure up to a temperature of 100°C to 300°C, and holding the temperature for 0.1-4h for curing, such that the connecting slurry between the SiC end plug and the SiC cladding tube is cured to form a connecting layer;
S4, resistance welding of said connection structure after curing to connect said SiC end plug to the SiC cladding tube to form a SiC cladding.
Preferably, step S1 includes adding a connecting material and a dispersant to an organic solvent and dispersing the connecting material and dispersant homogeneously;
The ratio of the connecting material to the dispersant is 99.9wt% to 99.5wt% : 0.1wt% to 0.5wt%.

Preferably, the connecting material includes at least one of a ceramic powder, a glass powder, a metal powder, a precursor and a sintering aid.

In the connecting material, the glass powder accounts for 0 to 50% of the total powder mass of the glass powder and the ceramic powder, the metal powder accounts for 0 to 50% of the total powder mass of the ceramic powder, the glass powder and the metal powder, and the precursor accounts for 0 to 50% of the total powder mass of the ceramic powder, the glass powder, the metal powder and the precursor.

Preferably, the ceramic powder is at least one of silicon carbide, zirconium carbide, titanium carbide, titanium carbonitride, and alumina, and its powder particle size is 0.1µm to 10µm.

Preferably, the glass powder is at least one of SiO₂-Y₂O₃-Al₂O₃, SiO₂-Y₂O₃-MgO, CaO-Al₂O₃, CaO-Al2O₃-SiO₂.

Preferably, the metal powder is at least one of Ti, Zr, Nb, Al, and Ni, and has a particle size of 0.1µm to 10µm.

Preferably, the precursor is at least one of polycarbosilane, polyoxysilane, and polysilazane, with a ceramic yield of 60wt% to 85wt%.
Preferably, the mass percentage of the sintering aid in the connecting material is 1% to 10%;
The sintering aid is Al₂O₃-Re₂O₃, wherein Re is Sc, Y, La, Ce, Pr, Nd, Pm, Sm, Eu, Gd, Tb, Dy, Ho, Er, Tm, Yb or Lu;
The ratio of Al₂O₃ to Re₂O₃ in the sintering aid is 1wt% to 99wt% : 99wt% to 1wt%.
Preferably, the dispersant is at least one of oleic acid, stearic acid and castor oil;

The organic solvent is at least one of anhydrous ethanol, acetone, xylene, and polyethylene glycol.

Preferably, step S3 and step S4 are carried out under an inert gas protective atmosphere or vacuum.

Preferably, in step S4, the resistance welding treatment is performed with a resistance welding current of 10,000A to 30,000A, a mechanical pressurization of 0.1MPa to 1MPa, and a welding time of 10s to 60s.

Preferably, in step S3, the resistivity of the connecting layer is 10⁻⁴ Ω·cm to 10⁻¹ Ω·cm.

Preferably, in step S4, the thickness of the connecting layer is 0.1µm to 20µm, and its shear strength at room temperature is 50MPa to 150MPa, and its shear strength at a high temperature of 1200°C is 80MPa to 200MPa; and the leakage rate of the SiC cladding is 0~1×10⁻⁸ Pa·m³/s.

The present invention further provides a SiC cladding, obtained by the connection method for a SiC cladding for nuclear use as described in any one of the foregoing.

The present invention further provides a silicon carbide cladding for use in the protection of a core in a nuclear reactor as a protective barrier for the core.

In the connection method for a silicon carbide cladding for nuclear use of the present invention, a connecting layer is provided between an end plug and a cladding tube, and a resistance welding technology is used to densify the connecting layer to densely connect the end plug and the cladding tube into a single unit, realizing a fast and solid connection between the end plug and the cladding tube, which greatly saves working time and improves the connection efficiency. The heat-affected zone of the resistance welding connection is smaller, which does not affect the nuclear fuel inside the cladding, thus improving the reliability of the cladding.

The resistance welding technology can realize the sealing of both ends of the SiC cladding tube, which can promote the replacement of traditional zirconium alloys, thus improving the safety of nuclear power.

### BRIEF DESCRIPTION OF THE DRAWINGS

The present invention will be further described in the following, in conjunction with the accompanying drawings and embodiments. In the drawings:
Fig. 1 is a flow chart of a connection method for a silicon carbide cladding for nuclear use of the present invention;
Fig. 2 is a low magnification microstructure diagram of a fracture surface resulted from a shear test of the SiC cladding which is fabricated according to Embodiment 1 of the present invention;
Fig. 3 is a high magnification microstructure diagram of a fracture surface resulted from a shear test of the SiC cladding which is fabricated according to Embodiment 1 of the present invention

### DETAILED DESCRIPTION OF EMBODIMENTS

The connection method for a silicon carbide cladding for nuclear use of the present invention may include the following steps:
S1, preparing a connecting slurry.

S2, uniformly applying the connecting slurry to a connecting surface of a SiC end plug and/or a connecting surface of a SiC cladding tube, and forming a connecting structure by mating the SiC end plug and the SiC cladding tube at their connecting surfaces.

S3, heating up the connecting structure to a temperature of 100°C to 300°C and holding the temperature for 0.1-4h for curing, such that the connecting slurry between the SiC end plug and the SiC cladding tube is cured to form a connecting layer.

S4, performing a resistance welding treatment to the connecting structure after curing to connect the SiC end plug and the SiC cladding tube to form the SiC cladding.

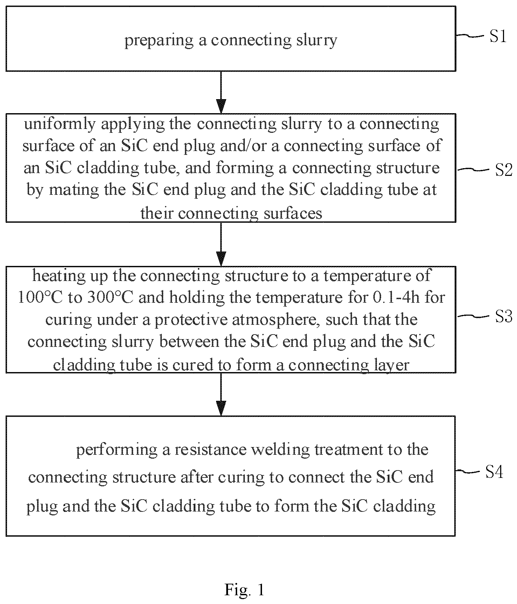

Specifically, referring to Fig. 1, in some embodiments, the connection method for the silicon carbide cladding for nuclear use of the present invention includes the following steps:
S1, preparing a connecting slurry.

A method for preparing the connecting slurry is as follows: a connecting material and a dispersant are added to an organic solvent and dispersed homogeneously to form the connecting slurry.

The dispersion may be done by at least one of ultrasonic dispersion, magnetic stirring dispersion, and ball mill dispersion.

The ratio of the connecting material to the dispersant is 99.9wt% to 99.5wt% : 0.1wt% to 0.5wt%. An appropriate amount of the organic solvent is added according to the desired solid content of the connecting slurry.

The connecting material includes at least one of a ceramic powder, a glass powder, a metal powder, a precursor, and a sintering aid. In the connecting material, the glass powder accounts for 0 to 50% of the total powder mass of the glass powder and the ceramic powder, the metal powder accounts for 0 to 50% of the total powder mass of the ceramic powder, the glass powder and the metal powder, and the precursor accounts for 0 to 50% of the total powder mass of the ceramic powder, the glass powder, the metal powder and the precursor.

As an option, the ceramic powder may be at least one of silicon carbide, zirconium carbide, titanium carbide, titanium carbonitride, and alumina, having a powder particle size of 0.1µm to 10µm and a purity of 99 to 99.999%. The glass powder is at least one of SiO₂-Y₂0₃-A1₂0₃ (mixed powder of SiO₂, Y₂O₃ and Al₂O₃), SiO₂-Y₂O₃-MgO (mixed powder of SiO₂, Y₂O₃ and MgO), CaO-Al₂O₃ (mixed powder of CaO and Al₂O₃), CaO-Al₂O₃-SiO₂ (mixed powder of CaO, Al₂O₃ and SiO₂). The metal powder is at least one of Ti, Zr, Nb, Al and Ni, having a powder particle size of 0.1µm to 10µm and a purity of 99 to 99.999%. The precursor is at least one of polycarbosilane, polyoxysilane and polysilazane, having a ceramic yield of 60wt% to 85wt%.

The sintering aid has a mass percentage of 1% to 10% in the connecting material.

The sintering aid is preferably Al₂O₃-Re₂O₃, and the ratio of Al₂O₃ to Re₂O₃ is 1wt% to 99wt% : 99wt% to 1wt%. In Re₂O₃, Re is a rare earth element, which may be Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium) or Lu (lutetium).

The dispersant is at least one of oleic acid, stearic acid, and castor oil.

The organic solvent is at least one of anhydrous ethanol, acetone, xylene, and polyethylene glycol.

S2, uniformly applying the connecting slurry to a connecting surface of a SiC end plug and/or a connecting surface of a SiC cladding tube, and forming a connecting structure by mating the SiC end plug and the SiC cladding tube at their connecting surfaces.

The connecting slurry may be uniformly applied to the connecting surface of the SiC end plug or to the connecting surface of the SiC cladding tube, and then the connecting surface of the SiC end plug and the connecting surface of the SiC cladding tube are placed opposite to each other and mated together to form the connecting structure. Of course, it is also possible to apply the connecting slurry to both the connecting surface of the SiC end plug and the connecting surface of the SiC cladding tube, and place the connecting surfaces opposite to each other and mate them together to form the connecting structure.

Typically, the SiC cladding includes the SiC cladding tube, and two SiC end plugs mated on opposite ends of the SiC cladding tube, respectively. Correspondingly, in this step, the two SiC end plugs are mated onto the opposite ends of the SiC cladding tube, with the connecting slurry located between the SiC end plugs and the SiC cladding tube.

S3, heating the connecting structure up to a temperature of 100°C to 300°C and holding for 0.1-4 h for curing under a protective atmosphere, so that the connecting slurry between the SiC end plug and the SiC cladding tube is cured to form a connecting layer.

The resistivity of the connecting layer is 10⁻⁴ Ω·cm to 10⁻¹ Ω·cm.

The protective atmosphere is an inert gas protective atmosphere or a vacuum, wherein the inert gas may be nitrogen or argon.

S4, placing the cured connecting structure on a resistance welding device for resistance welding treatment, so that the connecting layer is densified, which densely connects the SiC end plug and the SiC cladding tube to form the SiC cladding (silicon carbide cladding).

The resistance welding treatment is also performed under a protective atmosphere of nitrogen, argon or vacuum.

In the resistance welding treatment, the resistance welding current is 10000A to 30000A, the mechanical pressurization is 0.1MPa to 1MPa, and the welding time is 10s to 60s.

The connecting layer has a thickness of 0.1µm to 20µm, its shear strength at room temperature is 50MPa to 150MPa, and its shear strength at a high temperature of 1200°C is 80MPa to 200MPa;
The leakage rate of the SiC cladding obtained by the connection method of the present invention is 0~ 1 ×10⁻⁸ Pa·m³/s.

The SiC cladding of the present invention is utilized in the protection of the core in a nuclear reactor as a protective barrier for the core, which can be a cladding for fuel pellets.

The present invention is further described below by way of specific embodiments.

### Embodiment 1

Silicon carbide powder (with a particle size of 1 µm, and a purity of 99.99%) and metal Ti powder (with a particle size of 5µm, and a purity of 99.99%) are used as the connecting material, and the mass fraction of the metal Ti powder is 40%; the dispersant is castor oil with a mass percentage of 0.3wt%; and the sintering aid is Al₂O₃-Y₂O₃ with a mass percentage of 6wt%, with the mass ratio of Al₂O₃ to Y₂O₃ being 2 : 4; the silicon carbide powder, dispersant and sintering aid are mixed according to the above ratio, and then mixed in an xylene solvent to obtain the slurry.

The above slurry is uniformly coated on a surface of the SiC end plug, the end plug, the connecting layer and the cladding tube are assembled, and the resulted end plug-connecting layer-cladding tube assembly is placed in a tube furnace for curing. The curing process is as follows: under the Ar protective atmosphere, the temperature is increased to 200°C at a rate of 5°C/min, and then held at 200°C for 2h, and then decreased with the furnace to obtain a cured connecting assembly of the SiC cladding tube and end plugs; as measured, the cured connecting layer has a resistivity of 1×10⁻³ Ω·cm, the cured connecting assembly is fixed on the resistance welding device, the current of the device is adjusted to 20000A, a mechanical pressurization of 0.1MPa is applied for 30s, and the welding process ends, with the SiC cladding having a dense connecting layer obtained.

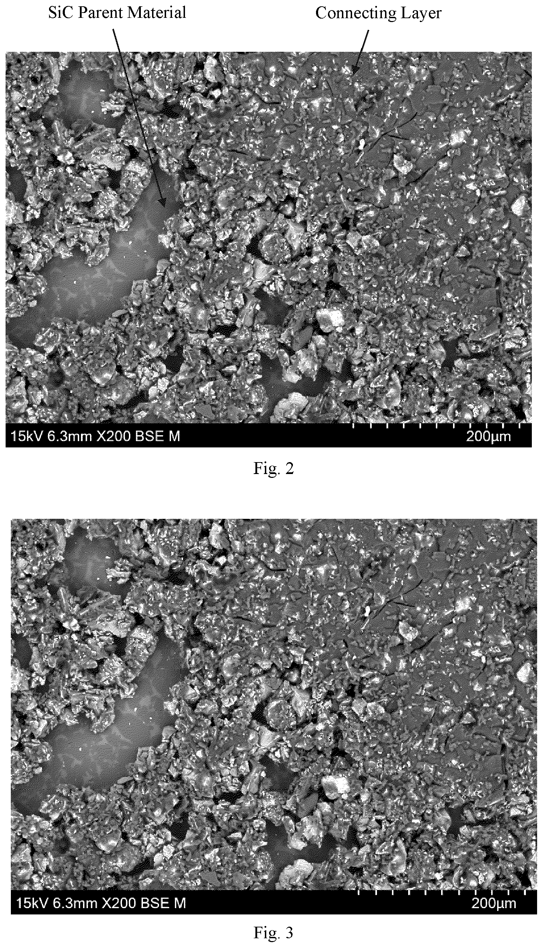

The low magnification and high magnification microstructures of a fracture surface of the SiC cladding resulted from a shear test are shown in Figs. 1 and 2, respectively. Fig. 1 shows the structure of the fracture surface resulted from the shear test under a low magnification electron microscope, and the locations of the SiC parent material (SiC cladding tube or SiC end plug) and the connecting layer after fracture are shown in the figure. As can be observed from the connecting layer under a high magnification electron microscope shown in Fig. 2, there is a dense distribution at the connecting layer.

The thickness of the connecting layer is 10µm, and the room temperature and 1200°C high temperature shear strength tests as well as airtightness test conducted to the SiC cladding show that: the shear strength at room temperature is 100MPa, the shear strength at a high temperature of 1200°C is 150MPa, and the leakage rate of the SiC cladding is 1×10⁻¹³ Pa·m³/s.

### Embodiment 2

Zirconium carbide powder (with a particle size of 0.5µm, and a purity of 99.99%) and polysiloxane precursor (with a ceramic yield of 70wt%) are used as the connecting material, and the mass fraction of polysiloxane is 50%. The connection of SiC cladding is realized in accordance with the method of Embodiment 1, wherein the curing temperature is 250°C which is held for 1h, and the connection is carried out in the resistance welding device after the curing process. The connecting process is carried out under a current of 30000A and a pressurization of 1MPa which is held for 10s, and a connection atmosphere of argon, thereby obtaining the SiC cladding with a dense connecting layer.

The SiC cladding prepared in this embodiment has a dense connecting layer, and its low magnification and high magnification microstructures are the same as those of Embodiment 1, and the structures shown in Figs. 1 and 2 can be referred to. The thickness of the connecting layer is 1µm, the shear strength at room temperature is 150MPa, the shear strength at a high temperature of 1200°C is 200MPa, and the leakage rate of the SiC cladding is 1×10⁻¹² Pa·m³/s.

### Embodiment 3

Titanium carbide (with a particle size of 10µm, and a purity of 99.99%) and metal Zr (with a particle size of 1µm, and a purity of 99.99%) are used as the connecting material, and the mass fraction of metal Zr is 20%, and the connection of the SiC cladding is realized in accordance with the method of Embodiment 1, wherein the curing temperature is 200°C which is held for 1h, and the connection is carried out in a resistance welding equipment after the curing process. The connecting process is carried out under a current of 25000A and a pressurization of 1MPa which is held for 10s, and a connection atmosphere of argon, thereby obtaining the SiC cladding with a dense connecting layer.

The SiC cladding prepared in this embodiment has a dense connecting layer, and its low magnification and high magnification microstructures are the same as those of Embodiment 1, and the structures shown in Figs. 1 and 2 can be referred to. The thickness of the connecting layer is 10µm, the shear strength at room temperature is 100MPa, the shear strength at a high temperature of 1200°C is 150MPa, and the leakage rate of the SiC cladding is 1×10⁻¹⁴ Pa·m³/s.

### Embodiment 4

Metal Ti powder (with a particle size of 5µm, and a purity of 99.99%) and zirconium carbide (with a particle size of 1µm, and a purity of 99.99%) are used as the connecting material, and the mass ratio of the zirconium carbide powder is 20%, and the connection of the SiC cladding is realized in accordance with the method of Embodiment 1, wherein the curing temperature is 150°C which is held for 4h, and the connection is carried out in a resistance welding device after the curing process. The connecting process is carried out under a current of 20000A and a pressurization of 0.5MPa which is held for 10s, and a connection atmosphere of argon, thereby obtaining the SiC cladding with a dense connecting layer.

The SiC cladding prepared in this embodiment has a dense connecting layer, and its low magnification and high magnification microstructures are the same as those of Embodiment 1, and the structures shown in Figs. 1 and 2 can be referred to. The thickness of the connecting layer is 20µm, the shear strength at room temperature is 100MPa, the shear strength at a high temperature of 1200°C is 150MPa, and the leakage rate of the SiC cladding is 1×10⁻¹³ Pa·m³/s.

### Embodiment 5

Metal Zr powder (with a particle size of 0.5µm, and a purity of 99.99%) and silicon carbide powder (with a particle size of 1µm, and a purity of 99.99%) are used as the connecting material, and the mass ratio of the silicon carbide powder is 30%, and the connection of the SiC cladding is realized in accordance with the method of Embodiment 1, wherein the curing temperature is 230°C which is held for 1h, and the connection is carried out in a resistance welding device after the curing process. The connecting process is carried out under a current of 19000A and a pressurization of 1MPa which is held for 10s, and a connection atmosphere of argon, thereby obtaining the SiC cladding with a dense connecting layer.

The SiC cladding prepared in this embodiment has a dense connecting layer, and its low magnification and high magnification microstructures are the same as those of Embodiment 1, and the structures shown in Figs. 1 and 2 can be referred to. The thickness of the connecting layer is 15µm, the shear strength at room temperature is 100MPa, the shear strength at a high temperature of 1200°C is 130MPa, and the leakage rate of the SiC cladding is 1×10⁻¹⁵ Pa·m³/s.

The above are only embodiments of the present invention, and are not intended to limit the patent scope of the present invention. Any equivalent structure or equivalent process transformation utilizing the contents of the specification and the accompanying drawings of the present invention, or direct or indirect applications in other related technical fields, shall equally fall within the patent scope of the present invention.

## Claims

1. A connection method for a silicon carbide cladding for nuclear use, **characterized in that** it comprises the following steps:
S1, preparing a connecting slurry;
S2, uniformly applying the connecting slurry to a connecting surface of a SiC end plug and/or a connecting surface of a SiC cladding tube, and forming a connecting structure by mating the SiC end plug and the SiC cladding tube at their connecting surfaces;
S3, heating the connecting structure up to a temperature of 100°C to 300°C and holding the temperature for 0.1-4h for curing under a protective atmosphere, such that the connecting slurry between the SiC end plug and the SiC cladding tube is cured to form a connecting layer;
S4, performing a resistance welding treatment to the connecting structure after curing to densify the connecting layer, which densely connects the SiC end plug and the SiC cladding tube to form the SiC cladding.

2. The connection method for a silicon carbide cladding for nuclear use according to claim 1, **characterized in that** step S1 comprises adding a connecting material and a dispersant to an organic solvent, and dispersing the connecting material and dispersant homogeneously;
the ratio of the connecting material to the dispersant is 99.9wt% to 99.5wt% : 0.1wt% to 0.5wt%.

3. The connection method for a silicon carbide cladding for nuclear use according to claim 2, **characterized in that** the connecting material comprises at least one of a ceramic powder, a glass powder, a metal powder, a precursor and a sintering aid;
in the connecting material, the glass powder accounts for 0 to 50% of the total powder mass of the glass powder and the ceramic powder, the metal powder accounts for 0 to 50% of the total powder mass of the ceramic powder, the glass powder and the metal powder, and the precursor accounts for 0 to 50% of the total powder mass of the ceramic powder, the glass powder, the metal powder and the precursor.

4. The connection method for a silicon carbide cladding for nuclear use according to claim 3, **characterized in that** the ceramic powder is at least one of silicon carbide, zirconium carbide, titanium carbide, titanium carbonitride, and alumina, and has a powder particle size of 0.1µm to 10µm;
the glass powder is at least one of SiO₂-Y₂O₃-Al₂O₃, SiO₂-Y₂O₃-MgO, CaO-Al₂O₃, CaO-Al₂O₃-SiO₂;
the metal powder is at least one of Ti, Zr, Nb, Al and Ni, and has a powder particle size of 0.1µm to 10µm;
the precursor is at least one of polycarbosilane, polyoxysilane, and polysilazane, and has a ceramic yield of 60wt% to 85wt%.

5. The connection method for a silicon carbide cladding for nuclear use according to claim 3, **characterized in that** the mass percentage of the sintering aid in the connecting material is 1% to 10%;
the sintering aid is Al₂O₃-Re₂O₃, wherein Re is Sc, Y, La, Ce, Pr, Nd, Pm, Sm, Eu, Gd, Tb, Dy, Ho, Er, Tm, Yb or Lu;
the ratio of Al₂O₃ to Re₂O₃ in the sintering aid is 1wt% to 99wt% : 99wt% to 1wt%.

6. The connection method for a silicon carbide cladding for nuclear use according to claim 2, **characterized in that** the dispersant is at least one of oleic acid, stearic acid and castor oil.

7. The connection method for a silicon carbide cladding for nuclear use according to claim 2, **characterized in that** the organic solvent is at least one of anhydrous ethanol, acetone, xylene, and polyethylene glycol.

8. The connection method for a silicon carbide cladding for nuclear use according to claim 1, **characterized in that** the protective atmosphere of step S3 and step S4 is nitrogen, argon or vacuum.

9. The connection method for a silicon carbide cladding for nuclear use according to claim 1, **characterized in that** in step S4, the resistance welding treatment is performed with a resistance welding current of 10,000A to 30,000A, a mechanical pressurization of 0.1MPa to 1MPa, and a welding time of 10s to 60s.

10. The connection method for a silicon carbide cladding for nuclear use according to any one of claims 1-9, **characterized in that** in step S3, the resistivity of the connecting layer is 10⁻⁴ Ω·cm to 10⁻¹ Ω·cm;
in step S4, the thickness of the connecting layer is 0.1µm to 20µm, and its shear strength at room temperature is 50MPa to 150MPa, its shear strength at a high temperature of 1200° C is 80MPa to 200MPa; and the leakage rate of the SiC cladding is 0~1×10⁻⁸ Pa·m³/s.

11. A connection method for a silicon carbide cladding for nuclear use, **characterized in that** it comprises the following steps:
S1, preparing a connecting slurry;
S2, uniformly applying the connecting slurry to a connecting surface of a SiC end plug and/or a connecting surface of the SiC cladding tube, and forming a connecting structure by matching the SiC end plug and the SiC cladding tube at their connecting surfaces;
S3, heating the connecting structure up to a temperature of 100°C to 300°C, and holding the temperature for 0.1-4h for curing, such that the connecting slurry between the SiC end plug and the SiC cladding tube is cured to form a connecting layer;
S4, performing a resistance welding treatment to the connecting structure after curing to connect the SiC end plug and the SiC cladding tube to form the SiC cladding.

12. The connection method for a silicon carbide cladding for nuclear use according to claim 11, **characterized in that** step S1 comprises adding a connecting material and a dispersant to an organic solvent and dispersing the connecting material and dispersant homogeneously;
the ratio of the connecting material to the dispersant is 99.9wt% to 99.5wt% : 0.1wt% to 0.5wt%.

13. The connection method for a silicon carbide cladding for nuclear use according to claim 12, **characterized in that** the connecting material comprises at least one of a ceramic powder, a glass powder, a metal powder, a precursor and a sintering aid;
in the connecting material, the glass powder accounts for 0 to 50% of the total powder mass of the glass powder and the ceramic powder, the metal powder accounts for 0 to 50% of the total powder mass of the ceramic powder, the glass powder and the metal powder, and the precursor accounts for 0 to 50% of the total powder mass of the ceramic powder, the glass powder, the metal powder and the precursor.

14. The connection method for a silicon carbide cladding for nuclear use according to claim 13, **characterized in that** the ceramic powder is at least one of silicon carbide, zirconium carbide, titanium carbide, titanium carbonitride, and alumina, and its powder particle size is 0.1µm to 10µm.

15. The connection method for a silicon carbide cladding for nuclear use according to claim 13, **characterized in that** the glass powder is at least one of SiO₂-Y₂O₃-Al₂O₃, SiO₂-Y₂O₃-MgO, CaO-Al₂O₃, CaO-Al2O₃-SiO₂.

16. The connection method for a silicon carbide cladding for nuclear use according to claim 13, **characterized in that** the metal powder is at least one of Ti, Zr, Nb, Al, and Ni, and has a particle size of 0.1µm to 10µm.

17. The connection method for a silicon carbide cladding for nuclear use according to claim 13, **characterized in that** the precursor is at least one of polycarbosilane, polyoxysilane, and polysilazane, with a ceramic yield of 60wt% to 85wt%.

18. The connection method for a silicon carbide cladding for nuclear use according to claim 13, **characterized in that** the mass percentage of the sintering aid in the connecting material is 1% to 10%;
the sintering aid is Al₂O₃-Re₂O₃, wherein Re is Sc, Y, La, Ce, Pr, Nd, Pm, Sm, Eu, Gd, Tb, Dy, Ho, Er, Tm, Yb or Lu;
the ratio of Al₂O₃ to Re₂O₃ in the sintering aid is 1wt% to 99wt% : 99wt% to 1wt%.

19. The connection method for a silicon carbide cladding for nuclear use according to claim 12, **characterized in that** the dispersant is at least one of oleic acid, stearic acid and castor oil;
the organic solvent is at least one of anhydrous ethanol, acetone, xylene, and polyethylene glycol.

20. The connection method for a silicon carbide cladding for nuclear use according to claim 11, **characterized in that** step S3 and step S4 are carried out under an inert gas protective atmosphere or vacuum.

21. The connection method for a silicon carbide cladding for nuclear use according to claim 11, **characterized in that** in step S4, the resistance welding treatment is performed with a resistance welding current of 10,000A to 30,000A, a mechanical pressurization of 0.1MPa to 1MPa, and a welding time of 10s to 60s.

22. The connection method for a silicon carbide cladding for nuclear use according to any one of claims 11-21, **characterized in that** in step S3, the resistivity of the connecting layer is 10⁻⁴ Ω·cm to 10⁻¹ Ω·cm;
in step S4, the thickness of the connecting layer is 0.1µm to 20µm, and its shear strength at room temperature is 50MPa to 150MPa, and its shear strength at a high temperature of 1200°C is 80MPa to 200MPa; and the leakage rate of the SiC cladding is 0~1×10⁻⁸ Pa·m³/s.

23. A silicon carbide cladding, **characterized in that** it is obtained by the connection method for a silicon carbide cladding for nuclear use according to any one of claims 1-10 or the connection method for a silicon carbide cladding for nuclear use according to any one of claims 11-22.

24. The silicon carbide cladding according to claim 23 for use in the protection of a core in a nuclear reactor as a protective barrier for the core.
